# DEMANDE DE BREVET EUROPEEN

(11) **EP 1 512 889 A1**
(43) Date de publication de la demande: **09.03.2005**
(21) Numéro de dépôt: 04077493.7
(22) Date de dépôt: 08.09.2004
(51) Int. Cl.: F16H 25/22, F16C 19/20

(54) **Palier à usure réduite**

(30) Priorité: 08.09.2003 FR 0310561
(71) Demandeur: Société d'Utilisation Scientifique et Industrielle du Froid USIFROID Société Anonyme, 78310 Maurepas (FR)
(72) Inventeur: Perrin, Jérôme, 78000 Versailles (FR)
(74) Mandataire: Lhuillier, René

(57) **Abrégé**

Le palier de couplage de deux pièces comporte deux pistes de roulement (11, 12), défilant l'une devant l'autre par roulement d'une couche interposée d'une pluralité de billes porteuses (21, 22), libres de toute structure intégrale d'espacement mutuel et présentant une dureté superficielle déterminée, et il comporte une pluralité autre de billes (31), d'espacement longitudinal, intercalées libres entre les billes porteuses (21, 22) et présentant une dureté superficielle inférieure à la dureté superficielle des billes porteuses (21, 22).

## Description

La présente invention concerne les paliers à roulement à billes ou équivalents.

Le problème à l'origine de l'invention était lié à l'utilisation de tels paliers dans des industries requérant un haut degré de propreté, comme la pharmacie, pour lesquelles il est exclu de lubrifier ou graisser les billes, à cause du risque de contamination des produits fabriqués par des effluves grasses.

Il fallait donc limiter les contraintes provoquant l'usure des billes, c'est-à-dire leur charge d'écrasement entre deux pistes de roulement séparées par les billes et limiter la vitesse de rotation, c'est-à-dire la vitesse relative entre ces pistes. Périodiquement, il fallait remplacer les billes.

La présente invention vise à limiter l'usure des billes ou équivalent, sans nécessité d'un montage complexe.

A cet effet, l'invention concerne un palier, de couplage de deux pièces, comportant deux pistes de roulement respectives, prévues pour défiler l'une devant l'autre par roulement d'une couche interposée d'une pluralité d'éléments rotatifs porteurs présentant une dureté superficielle déterminée, les éléments rotatifs porteurs étant libres de toute structure intégrale d'espacement mutuel, caractérisé par le fait qu'il comporte une pluralité autre d'éléments rotatifs, d'espacement longitudinal, respectivement intercalés libres entre les éléments rotatifs porteurs et présentant une dureté superficielle inférieure à la dureté superficielle des éléments rotatifs porteurs.

Ainsi, par exemple dans le cas de billes, le palier présente une alternance, d'une part, de billes de type porteur, résistant à l'écrasement et en contact avec les deux pistes par deux calottes sommitales ponctuelles, opposées selon une direction transversale d'épaisseur du palier, correspondant à une valeur de diamètre des billes porteuses, et, d'autre part, de billes de type d'espacement longitudinal, moins dures, évitant donc tout contact mutuel entre des calottes latérales, mutuellement en regard mais à distance, appartenant aux billes porteuses.

Tout frottement est ainsi supprimé entre les calottes latérales en regard, de deux éléments rotatifs porteurs voisins, à vitesses de même direction, transversale, mais de sens opposés, qui sont ainsi mutuellement espacées. En outre, comme les éléments rotatifs porteurs roulent sur les deux pistes, il ne subsiste, au niveau de ces pistes, qu'un éventuel résidu de glissement des éléments rotatifs correspondant au cas dans lequel les deux surfaces de roulement ne seraient pas exactement de même longueur, en étant par exemple concentriques.

Aucune structure intégrale, telle qu'un chapelet de cages ou d'axes, n'est ainsi nécessaire pour maintenir un espace latéral, c'est-à-dire longitudinal par rapport à une direction d'extension des pistes, entre les billes porteuses, ce qui simplifie le montage. Les billes porteuses sont libres latéralement dans l'espace limité transversalement par les deux pistes et les billes d'espacement sont de même libres latéralement et éventuellement transversalement si leur diamètre est moindre que celui des billes porteuses.

Entre deux éléments rotatifs porteurs, il peut être prévu un ou plusieurs des éléments rotatifs d'espacement, c'est-à-dire que la pluralité d'éléments rotatifs d'espacement peut être supérieure à la pluralité d'éléments rotatifs porteurs. Ainsi, éventuellement, plusieurs éléments rotatifs d'espacement sont intercalés, entre deux éléments rotatifs porteurs voisins quelconques, de façon latéralement adjacente et/ou superposés, c'est-à-dire alors sensiblement en alignement transversal, avec des diamètres, mutuellement identiques ou non, qui sont inférieurs au diamètre des éléments rotatifs porteurs.

Ainsi, pour résoudre le problème de résistance à l'usure, la demanderesse a dirigé sa recherche de solution dans une direction totalement à l'opposé de ce qui semblait rationnel, puisque la solution ici présentée consiste, d'une part, à autoriser un contact entre éléments rotatifs de types différents et, d'autre part, à prévoir une dureté plus faible pour les éléments rotatifs d'espacement, c'est-à-dire de les sacrifier pour ménager les éléments rotatifs porteurs. Comme il est facile de prévoir que les éléments rotatifs d'espacement assurent initialement un espacement latéral dépassant une valeur de seuil, ceux-ci continuent à assurer une fonction de bourrage, pour maintenir hors de contact mutuel les calottes latérales des éléments rotatifs porteurs, même en cas d'usure importante des éléments rotatifs d'espacement.

Les éléments rotatifs d'espacement constituent ainsi des parois latérales de cage fictive, mobiles en translation longitudinale et en rotation sous l'action des éléments rotatifs porteurs qui les repoussent latéralement, mais les éléments d'espacement limitent le mouvement relatif longitudinal, c'est-à-dire l'espacement latéral, entre les éléments rotatifs porteurs eux-mêmes, sans toutefois limiter le mouvement absolu de rotation et de translation des éléments rotatifs porteurs par rapport aux pistes.

Les éléments rotatifs des deux types évoqués ci-dessus peuvent être des billes, des rouleaux cylindriques ou ovoïdes, ou tout autre élément de section sensiblement circulaire, résistant à l'écrasement, les deux types étant de formes identiques ou différentes dans toute forme de réalisation voulue.

Avantageusement, les éléments rotatifs porteurs présentent une dureté superficielle supérieure à celle des pistes.

Toute usure des éléments rotatifs porteurs est ainsi limitée, si bien qu'ils conservent un bon état de surface et atténuent ainsi l'usure des éléments rotatifs d'espacement.

Les éléments rotatifs porteurs sont de préférence métalliques et les éléments rotatifs d'espacement peuvent être en matériau plastique. Il n'est toutefois pas exclu de prévoir que ces derniers soient constitués par un noyau dur, par exemple métallique, portant une couche de matériau mou, du genre plastique.

Les éléments rotatifs porteurs présentent avantageusement une dureté Vickers superficielle supérieure à 2000 HV.

Pour limiter leurs usures respectives, les éléments rotatifs, respectivement porteurs et d'espacement, présentent de préférence un coefficient de frottement mutuel inférieur à 0,04.

Dans une forme de réalisation, les éléments rotatifs porteurs et les éléments rotatifs d'espacement sont sensiblement de même rayon.

Les deux pistes de roulement peuvent appartenir à respectivement une vis et un écrou d'un boulon formant palier, associé à une conduite de remise en circulation des divers éléments rotatifs, reliant une extrémité aval d'un tronçon des pistes à une extrémité amont du tronçon.

Dans une forme de réalisation particulière, les éléments rotatifs d'espacement présentent un profil dont un tronçon est complémentaire d'un tronçon d'un profil présenté par les éléments rotatifs porteurs.

Les éléments rotatifs respectivement porteurs et d'espacement sont ainsi en contact par une surface, ce qui limite la pression d'écrasement, entre deux des éléments rotatifs porteurs, subie par chaque élément rotatif d'espacement.

Les pistes peuvent présenter chacune un profil transversal comportant un relief de forme complémentaire à la forme d'un relief d'un profil d'au moins l'une des deux pluralités parmi le groupe constitué par la pluralité des éléments rotatifs porteurs et la pluralité des éléments rotatifs d'espacement.

L'un des reliefs constitue ainsi, pour l'autre relief, un rail de guidage longitudinal selon les pistes.

En particulier alors, les éléments rotatifs d'espacement peuvent être des billes présentant une ou deux ou, de préférence, trois gorges diamétrales, dans des plans respectifs sensiblement orthogonaux, l'une des gorges pouvant ainsi servir de piste de roulement annexe pour deux billes porteuses voisines, tandis que des zones de surface sphérique de la bille d'espacement peuvent être en appui sur des bords relevés respectivement de chaque côté des pistes pour ainsi guider l'ensemble des deux types de billes en les maintenant centrées par rapport aux bords de pistes. La bille d'espacement présente ainsi un noyau central portant huit protubérances équiréparties comme les coins d'un cube.

L'invention sera mieux comprise à l'aide de la description suivante d'une forme de réalisation préférée du palier de l'invention, en référence au dessin annexé, sur lequel :
- la figure 1 est une vue en coupe verticale schématique d'une armoire comportant un mécanisme à palier à roulement selon l'invention, et
- la figure 2 est une coupe verticale d'un tronçon du palier, illustrant des éléments rotatifs du palier.

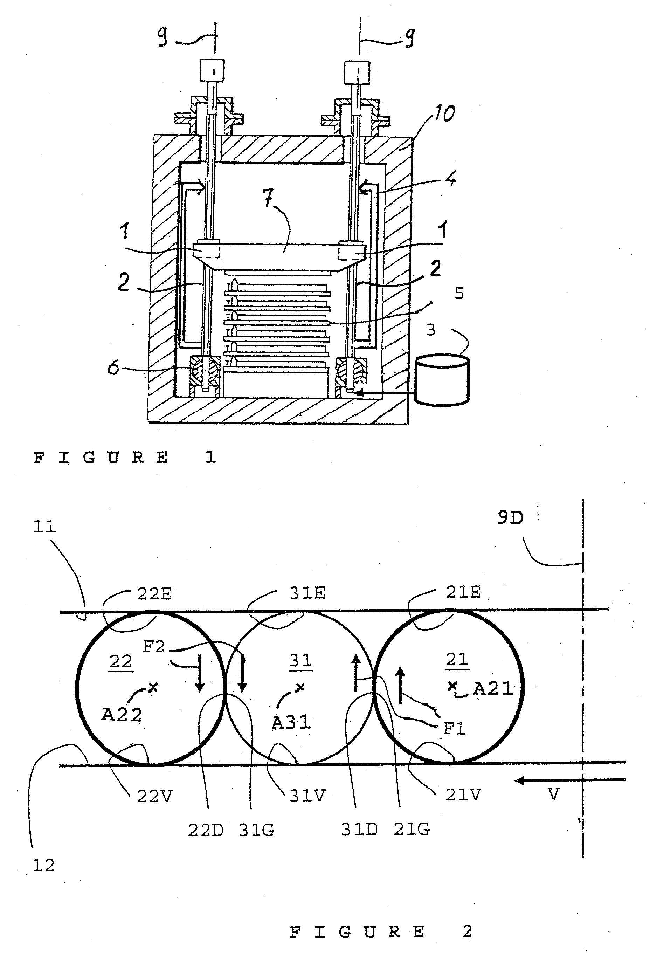

La figure 1 représente schématiquement un mécanisme "ascenseur" destiné à translater verticalement une pluralité d'étagères 5 dans une armoire 10 qui est ici une cuve de lyophilisation. Bien évidemment, l'invention n'est pas limitée à cette application particulière.

Le mécanisme forme un portique comprenant deux colonnes rotatives, d'axes géométriques verticaux 9, s'étendant sur toute la hauteur de chaque côté à l'intérieur de l'armoire 10, munies d'un filetage pour respectivement constituer deux vis 2 porteuses, de support, de guidage et d'entraînement vertical d'une poutre horizontale 7 dont deux extrémités opposées comportent à cet effet deux trous taraudés respectifs, constituant deux écrous 1, portés, ici fixes en ce qui concerne la rotation, respectivement couplés aux deux vis 2, qui les portent. Les étagères 5 sont suspendues à la poutre 7 par un chapelet de biellettes articulées, non représentées, permettant de déployer l'ensemble des étagères 5 pour y placer des flacons, et ensuite de les reployer par descente de la poutre 7, afin d'y enfoncer des bouchons respectifs, en une seule opération. Une extrémité inférieure de chaque vis 2 est portée par un écrou support 6 à pas de filetage nul. Un moteur commun 3 entraîne en rotation les vis 2 dans le sens voulu.

En variante, les deux écrous 1 pourraient être montés rotatifs et associés à un moteur, pour coopérer avec des vis 2 qui seraient totalement fixes. Un montage dual est aussi envisageable, dans lequel les deux vis 2 seraient remplacées par des écrous porteurs, rotatifs ou fixes en ce qui concerne la rotation.

Chaque ensemble constitué par un écrou 1 et la vis 2 associée forme ainsi un boulon 1, 2 constituant un palier à deux pistes en hélice axialement opposées, et la paire de tels boulons ainsi formés entraîne les étagères 5, la présente duplication des boulons 1, 2 pouvant toutefois ne pas être prévue dans un autre exemple.

Une conduite 4 assure ici la remise en circulation, ou recyclage, de divers éléments rotatifs de palier représentés très schématiquement sur la figure 2. La conduite 4 relie un tronçon, ici d'extrémité aval, ou de sortie, de chaque boulon 1, 2 à un tronçon amont, ici d'extrémité d'entrée. Un tel montage à recirculation de billes étant décrit dans le catalogue de la société allemande Korta, une description plus détaillée est ici inutile.

La figure 2 représente, en plan, le développement d'une vue en coupe circulaire sensiblement verticale, d'un tronçon ou secteur angulaire du palier en hélice de la figure 1. La coupe est effectuée selon une surface sensiblement cylindrique axée sur l'un des axes 9 et de rayon prévu pour passer sensiblement à mi-hauteur radiale de deux filets coopérants, de respectivement l'écrou 1 et la vis associée 2, à profils respectifs sensiblement en "V" mutuellement entrelacés, c'est-à-dire imbriqués, ouverts vers l'axe 9, c'est-à-dire vers l'avant de la figure 2. Le trait mixte vertical référencé 9D sur la figure 2 illustre uniquement la direction de l'axe 9, et non sa position réelle. Une branche supérieure d'un tel "V", femelle, définie par un profil de taraudage de l'écrou 1, porté, est ainsi en appui sur une branche supérieure d'un "V", mâle, défini par un profil de filetage de la vis 2, porteuse, qui est logé dans le "V" femelle. Les deux branches supérieures ci-dessus sont donc des branches fonctionnelles, alors que deux branches inférieures des deux "V" respectifs femelle et mâle, défilant à distance mutuelle l'une devant l'autre lors de la rotation, n'ont pas de fonction de support, compte tenu du fait que, dans cet exemple, seule s'exerce la gravité.

Ainsi, une piste 11 de roulement, portée, est ménagée sur la branche supérieure du "V" femelle, c'est-à-dire sur un flanc supérieur de profil de taraudage de l'écrou 1, la piste 11 étant donc tournée partiellement vers le bas ainsi que vers l'axe 9. Une piste associée 12 de roulement, porteuse, est ménagée sur la branche supérieure du "V" mâle, parallèlement en regard de, et sous, la piste 11, c'est-à-dire que la piste 12 se trouve sur un flanc porteur, de niveau de hauteur moindre par rapport au flanc portant la piste 11, flanc porteur défini par un profil de filetage de la vis 2, porteuse. La piste 12 est donc tournée partiellement vers le haut et aussi à l'opposé de l'axe 9. La coupe de la figure 2 passe ainsi par des points de contact instantané, haut et bas, de billes porteuses 21, 22, ci-après décrites, avec les pistes 11 et 12 qu'elles maintiennent à distance mutuelle. Les pistes 11, 12 délimitent ainsi un canal en hélice dans lequel les billes porteuses, bien qu'écrasées transversalement, ont toutefois tendance à s'écouler par gravité.

La piste 12, de la vis 2 rotative, présente une vitesse linéaire V, illustrée par une flèche V ici orientée vers la gauche, de déplacement parallèlement à la piste 11 de l'écrou 1 fixe en rotation.

Entre les pistes 11 et 12, et sur toute leur longueur, est interposée une pluralité d'éléments rotatifs, de type porteur, à sections circulaires de même diamètre. Les éléments rotatifs porteurs, dont seuls deux sont dessinés, sont ici les billes porteuses 21, 22, présentant une dureté superficielle déterminée choisie pour être relativement élevée, c'est-à-dire supérieure à une valeur de seuil minimal. Il s'agit, dans cet exemple, d'acier ayant subi un traitement de surface pour y incorporer un matériau résistant à l'usure, afin de conserver une très bonne qualité de poli.

Les billes porteuses 21, 22 tournent autour d'axes géométriques respectivement 21A et 22A présentant des directions, dites radiales, c'est-à-dire passant par l'axe 9 et perpendiculaires au plan de la figure 2. Les points hauts ci-dessus, de contact instantané des billes rotatives porteuses 21, 22 sur la piste 11, sont respectivement référencés 21E et 22E, tandis que les points bas, opposés, de contact instantané sur la piste 12, sont référencés 21V et 22V.

Une légère inclinaison longitudinale des pistes 11, 12, par rapport à une direction normale à l'axe 9, détermine, sur un tour de vis 2, une avance axiale définissant un pas de filetage, qui n'apparaît pas sur la figure 2. Les pistes 11, 12 des branches fonctionnelles, supérieures, de chacun des deux profils complémentaires en "V" présentent un angle de dévers, c'est-à-dire une pente par rapport à une radiale à l'axe 9, qui fait que l'alignement des deux points de contact instantané opposés 21E, 21V, respectivement 22E, 22V, de chaque bille porteuse 21, 22 est incliné d'autant sur l'axe 9. De ce fait, pour que la coupe de la figure 2 passe exactement, comme représenté, par les points opposés de contact instantané ci-dessus, la surface de coupe est en fait engendrée par un segment de droite incliné vers le haut sur l'axe 9 d'un angle égal à l'angle de dévers, et se déplaçant en vrille le long de l'axe 9 selon le pas de filetage.

Dans un autre exemple, les billes 21, 22 constituant ici les éléments rotatifs peuvent être remplacées par des rouleaux en contact avec les pistes 11, 12 selon une génératrice. Chaque rouleau peut être de rayon quasi constant, si chaque piste 11, 12 est transversalement rectiligne comme ici, avec toutefois, dans cet exemple, un profil radial, c'est-à-dire selon une coupe par un plan contenant l'axe 21A ou 22A, présentant une légère conicité s'ouvrant radialement vers l'extérieur pour compenser la croissance de la longueur de chaque piste 11, 12 en fonction de la distance à l'axe 9, en partant de leur bord respectif radialement interne. Le rayon des rouleaux peut toutefois varier selon une position axiale courante correspondante sur l'axe 21A ou 22A, si les pistes 11, 12 présentent un profil transversal courbe.

Pour les éléments rotatifs porteurs, on peut en particulier songer à un profil radial convexe ou bien encore concave sur certains tronçons de leur longueur selon l'axe 21A, 22A. Ce profil peut ainsi être creusé en V ou toute autre forme, par exemple en forme de deux "C" à dos opposés, ou de deux troncs de cône reliés par leurs bases, ou leurs sommets, les pistes 11, 12 étant de forme complémentaire, épousant ainsi ce profil radial qui présente ainsi une partie radialement intermédiaire, par exemple radialement centrale, qui est étranglée, c'est-à-dire dans ou à proximité du plan de coupe de la figure 2. Un tel profil radial étranglé présente l'avantage de maintenir les éléments rotatifs porteurs dans la direction transversale voulue, perpendiculaire au plan de la figure 2. En effet, en cas de désalignement transversal des éléments rotatifs porteurs, des tronçons extrêmes de ceux-ci, situés aux extrémités de l'axe 21A ou 22A et de diamètre accru par rapport à une valeur de diamètre des sommets jointifs des troncs de cône, seraient ramenés vers une partie radialement intermédiaire, du canal, à profil ajusté au profil étranglé de la partie radialement intermédiaire des éléments rotatifs porteurs, c'est-à-dire sensiblement vers le plan de la figure 2. La partie radialement intermédiaire du canal étant ainsi de hauteur axiale minimale entre les pistes 11, 12, celles-ci imposeraient une force axiale de pression accrue sur l'élément rotatif porteur concerné, qui, par effet de coin, tendrait ainsi à reprendre l'alignement radial voulu par rapport à l'axe 9. Dans le présent exemple, le profil radial des pistes 11 et 12 pourrait ainsi, en variante, présenter une courbure voisine voire égale à celle des billes porteuses 21, 22.

Une autre pluralité, non entièrement représentée, d'élément rotatifs d'un autre type, précisément de type "espacement", est de même répartie sur toute la longueur du canal entre les pistes 11, 12, chaque tel élément rotatif d'espacement étant intercalé entre deux billes porteuses comme les billes porteuses 21 et 22, donc longitudinalement dans le palier, pour éviter leur contact mutuel avec frottement au niveau de points latéraux en regard à mi-hauteur, 21G, de gauche pour la bille porteuse 21, et 22D, de droite pour la bille porteuse 22. Ces points latéraux pourraient même être des calottes latérales si le contact entre les billes porteuses 21, 22 n'était pas ainsi évité. L'élément rotatif d'espacement seul représenté est ici une bille d'espacement 31 qui, dans cet exemple, présente un diamètre sensiblement égal ou légèrement inférieur à celui des billes porteuses 21 et 22. La bille d'espacement 31 présente une dureté superficielle inférieure à celle des billes porteuses 21, 22. Précisément, la bille d'espacement 31 est ici en matériau plastique. La bille d'espacement 31 tourne autour d'un axe géométrique 31A présentant une direction, dite radiale, c'est-à-dire passant par l'axe 9 et perpendiculaire au plan de la figure 2.

Les pistes 11, 12 et les billes porteuses 21, 22 sont ici en acier inoxydable martensite ayant subi un traitement de surface DLC, (Diamond-Like Carbon, pour carbone type carré), tandis que les billes d'espacement 31 sont en téflon, PTFE. La dureté Vickers des pistes 11, 12 est ici d'environ 800 HV, celle des billes porteuses 21, 22 est supérieure et vaut environ 900 HV, avec une dureté de leur traitement de surface encore supérieure et valant ici 3000 HV. La dureté Brinell des billes d'espacement 31 est ici d'environ 30 HK selon la norme DIN 53 456. Le coefficient de frottement entre une bille porteuse 21 (ou 22) et, respectivement, une piste 11 (ou 12) et une bille d'espacement 31, est ici de 0,1 à 0,2, respectivement inférieur à 0,04.

Les références 31E et 31V désignent des points opposés de contact instantané, c'est-à-dire de contact courant, respectivement "haut" et "bas", de la bille d'espacement 31 avec respectivement les pistes 11 et 12, et les références 31D et 31G désignent des points latéraux à mi-hauteur, à droite et à gauche, respectivement en contact avec les points latéraux dits de gauche 21G et de droite 22D, à mi-hauteur des billes porteuses respectives 21 et 22, ces divers points en contact étant en fait de petites surfaces sous forme de calottes.

Les détails de fonctionnement des éléments du palier vont maintenant être décrits.

Lorsque la piste 12 de la vis rotative 2 défile devant la piste 11, les billes porteuses 21, 22 tendent à être entraînées en rotation, ici dans le sens des aiguilles d'une montre, jusqu'à une vitesse angulaire pour laquelle leurs points de contact instantané 21V ou 22V présentent une vitesse linéaire relative nulle par rapport à la piste 12, c'est-à-dire la vitesse V pour un roulement sans glissement. Il en est de même pour leurs points de contact instantané 21E et 22E avec la piste 11, fixe.

La bille d'espacement 31 peut avoir divers mouvements, selon les forces qu'elle subit. Ainsi, en cas de compression longitudinale par les billes porteuses 21, 22 tendant à se rapprocher, la bille d'espacement 31 tend à tourner dans le sens opposé à celui des billes porteuses 21, 22. En effet, le point latéral 31D, en contact avec le point latéral 21G, est entraîné par celui-ci à la vitesse linéaire V, commune au point latéral 21G et à la piste 12, la vitesse du point latéral 21G étant toutefois montante selon une flèche F1. Symétriquement, par rapport au centre de la bille d'espacement 31, le point latéral 22D, en contact avec le point latéral 31G, entraîne par frottement le point latéral 31G à la vitesse V, verticalement vers le bas, selon une flèche F2. De ce fait, la bille d'espacement 31 roule quasiment sans glisser sur les billes porteuses 21, 22, ce qui contribue à éviter l'usure.

L'un des points de contact instantané 31E et 31V, voire les deux, est susceptible de frotter sur la piste 11, 12 en regard. Le frottement est toutefois sous faible pression, puisque la bille d'espacement 31 n'est pas porteuse. La bille d'espacement 31 ne subit essentiellement que des forces longitudinales de la part des billes porteuses 21, 22, à l'exclusion de forces transversales vers l'une des pistes 11, 12, puisque la bille d'espacement 31 est ici sensiblement de même taille que celles-ci, et n'est donc pas repoussée verticalement vers l'une des deux pistes 11, 12 par effet de coin. Son frottement sur les pistes 11, 12 est donc réduit.

En variante, il peut être prévu que, à titre d'éléments rotatifs d'espacement, les billes d'espacement 31 soient remplacées par des rouleaux cylindriques ou de section variable concave ou convexe, par exemple sensiblement des troncs de cône à bases ou bien sommets accolés, tel qu'exposé plus haut pour les billes porteuses 21, 22. En cas d'éléments rotatifs porteurs à forme renflée ou bien étranglée dans une partie radialement intermédiaire, c'est-à-dire dans une partie sensiblement centrale coupée par le plan de la figure 2 qui coupe les axes 21A, 22A à mi-longueur, il peut être prévu que les pistes 11, 12 ne présentent un profil radial, complémentaire de celui des éléments rotatifs porteurs, que sur une partie de la longueur des axes 21A et 22A, qui correspondent sensiblement à la largeur des pistes 11, 12, pour que les éléments rotatifs d'espacement puissent présenter, sur le reste de la longueur des axes 21A, 22A, un profil radial complémentaire de celui des éléments rotatifs porteurs ou des pistes 11, 12. Par exemple, le profil radial des pistes 11, 12 peut être prévu pour que les éléments rotatifs d'espacement comportent deux épanouissements opposés sensiblement en tronc de cône à chaque extrémité respective de l'axe 31A, ou toute autre forme, pour venir au contact des deux extrémités correspondantes, des éléments rotatifs porteurs associés, présentant un profil radial qui, le long de l'axe 21A ou 22A, s'effile, de façon complémentaire aux dits épanouissements. De tels épanouissements augmentent ainsi la longueur axiale de contact entre les éléments rotatifs porteurs et les éléments rotatifs d'espacement et constituent en outre une masse de matière de réserve soumise, par les éléments rotatifs porteurs, à des contraintes de compression moindres que la matière située en partie radialement intermédiaire. En effet, en cas de rapprochement de deux éléments rotatifs porteurs, les deux épanouissements ci-dessus, qui présentent un profil en coin, peuvent facilement fluer radialement par rapport à l'axe 9, c'est-à-dire parallèlement à l'axe 31A vers des bords respectivement radialement interne et radialement externe du canal.

Il peut en particulier être prévu que le tronçon intermédiaire de la bille d'espacement 31, coupé sur la figure 2, présente un diamètre réduit pour que, à chaque extrémité de l'axe 31A, seuls les deux épanouissements ci-dessus, alors à profil en cornet de trompette soient, sur toute leur longueur, au contact d'une bande de surface des billes porteuses 21 et 22, par leur contour en arc de cercle de rayon de courbure correspondant au rayon des billes porteuses 21, 22.

De façon plus générale, partant d'une bille d'espacement comme la bille 31 qui présente un diamètre ici sensiblement égal à celui des billes porteuses 21, 22, il peut être prévu que la bille d'espacement 31 présente une gorge en position diamétrale dans un plan arbitraire, limitée par deux flancs opposés à profil correspondant au rayon des billes porteuses 21, 22, et comportant un fond de gorge qui, éventuellement, est renfoncé pour ne pas se trouver au contact des points latéraux 21G et 22D. Compte tenu du fait que les billes sur recyclées par la conduite 4 selon une orientation aléatoire, il peut être prévu une deuxième telle gorge diamétrale, de préférence dans un plan perpendiculaire au plan de la première gorge ci-dessus, et même éventuellement une troisième même gorge diamétrale, et aussi de préférence dans un plan perpendiculaire aux plans respectifs des première et deuxième gorge. De la sorte, la bille d'espacement 31 ainsi modifiée reprend facilement, en sortie de la conduite 4, une orientation telle que décrite ci-dessus. En outre, si les pistes 11, 12 présentent des bords relevés pour que le canal à billes soit de section circulaire correspondant à celle des billes 21, 22 et 31 d'origine, des portions de surface sphérique conservées de la bille 31 d'origine servent, à chaque extrémité de l'axe 31A, d'appui sur les bords relevés des pistes 11, 12 pour ainsi empêcher toute translation parasite de la bille d'espacement 31 selon l'axe 31A. Les billes porteuses 21, 22 sont ainsi elles-mêmes centrées de même sur les pistes 11, 12 par l'intermédiaire des billes d'espacement 31.

Dans cet exemple, les pistes 11, 12 présentent, comme indiqué, une dureté superficielle inférieure à celle des billes porteuses 21, 22. Ceci présente l'avantage de préserver la qualité de surface des billes porteuses 21, 22 et limite ainsi la vitesse d'évolution de l'usure de la bille d'espacement 31 par abrasion sur celles-ci, usure qui est due au fait que, même entraînée à la vitesse F1, F2 des billes porteuses 21, 22, la bille d'espacement 31 est écrasée longitudinalement de façon variable sur celle-ci, ce qui peut provoquer une usure si les surfaces des billes porteuses 21, 22 sont de qualité de surface insuffisante.

La conduite 4, qui assure un rebouclage sur lui-même du canal à billes formé par les pistes 11, 12, évite ainsi toute compression latérale excessive des divers éléments rotatifs comme les billes porteuses 21, 22, et les billes d'espacement comme la bille d'espacement 31. Comme il s'agit ici de billes, donc de forme exempte d'orientation spécifique à maintenir, la conduite 4 se présente sous la forme d'un tube de section interne circulaire. Dans le cas de formes allongées selon un axe de rotation, la conduite 4 aurait une section correspondante pour maintenir l'orientation voulue de l'axe, ou tout au moins comporterait, en partie haute, une embouchure de sortie conformée à cet effet, comme décrit pour le canal.

## Revendications

1. Palier, de couplage de deux pièces, comportant deux pistes de roulement respectives (11, 12), prévues pour défiler l'une devant l'autre par roulement d'une couche interposée d'une pluralité d'éléments rotatifs porteurs (21, 22) présentant une dureté superficielle déterminée, libres de toute structure intégrale d'espacement mutuel, **caractérisé par le fait qu'**il comporte une pluralité autre d'éléments rotatifs (31), d'espacement longitudinal, respectivement intercalés libres entre les éléments rotatifs porteurs (21, 22) et présentant une dureté superficielle inférieure à la dureté superficielle des éléments rotatifs porteurs (21, 22).

2. Palier selon la revendication 1, dans lequel les éléments rotatifs porteurs (21, 22) présentent une dureté superficielle supérieure à celle des pistes (11, 12).

3. Palier selon l'une des revendications 1 et 2, dans lequel, les éléments rotatifs porteurs (21, 22) étant métalliques, les éléments rotatifs d'espacement (31) sont en matériau plastique.

4. Palier selon l'une des revendications 1 à 3, dans lequel les éléments rotatifs porteurs (21, 22) présentent une dureté Vickers superficielle supérieure à 2000 HV.

5. Palier selon l'une des revendications 1 à 4, dans lequel les éléments rotatifs, respectivement porteurs (21, 22) et d'espacement (31), présentent un coefficient de frottement mutuel inférieur à 0,04.

6. Palier selon l'une des revendications 1 à 5, dans lequel les éléments rotatifs porteurs (21, 22) et les éléments rotatifs d'espacement (31) sont sensiblement de même rayon.

7. Palier selon l'une des revendications 1 à 6, dans lequel plusieurs éléments rotatifs d'espacement (31) sont intercalés entre deux éléments rotatifs porteurs voisins (21, 22) quelconques.

8. Palier selon l'une des revendications 1 à 7, dans lequel les deux pistes de roulement (11, 12) appartiennent à respectivement une vis (2) et un écrou (1) d'un boulon associé à une conduite (4) de remise en circulation des éléments rotatifs porteurs (21, 22) et des éléments rotatifs d'espacement (31), reliant une extrémité aval d'un tronçon des pistes (11, 12) à une extrémité amont du tronçon.

9. Palier selon l'une des revendications 1 à 8, dans lequel les éléments rotatifs d'espacement (31) présentent un profil dont un tronçon est complémentaire d'un tronçon d'un profil présenté par les éléments rotatifs porteurs (21, 22).

10. Palier selon l'une des revendications 1 à 9, dans lequel les pistes de roulement (11, 12) présentent chacune un profil transversal comportant un relief de forme complémentaire à la forme d'un relief d'un profil d'au moins l'une des deux pluralités parmi le groupe constitué par la pluralité des éléments rotatifs porteurs (21, 22) et la pluralité des éléments rotatifs d'espacement (31).

11. Palier selon l'une des revendications 1 à 10, dans lequel les éléments rotatifs d'espacement (31) sont des billes libres en rotation.

12. Palier selon les revendications 10 et 11 prises en combinaison, dans lequel les billes (31) constituant les éléments rotatifs d'espacement présentent trois gorges diamétrales dans des plans respectifs sensiblement orthogonaux.

13. Palier selon l'une des revendications 1 à 12, dans lequel les éléments rotatifs porteurs (21, 22) sont des billes.
